# EUROPEAN PATENT APPLICATION

(11) **EP 4 082 685 A1**
(43) Date of publication of application: **02.11.2022**
(21) Application number: 19932279.3
(22) Date of filing: 26.12.2019
(51) Int. Cl.: B21B 37/00, C22C 16/00

(54) **METHOD OF MANUFACTURING TUBULAR PRODUCTS FROM A ZIRCONIUM ALLOY**

(71) Applicant: Joint-Stock Company "TVEL", Moscow 115409 (RU)
(72) Inventor: NOVIKOV, Vladimir Vladimirovich, Moscow 123458 (RU); KABANOV, Aleksandr Anatolevich, Moscow 115191 (RU); NIKULINA, Antonina Vasilevna, Moscow 125124 (RU); MARKELOV, Vladimir Andreevich, Moscow 123308 (RU); SABLIN, Mihail Nikolaevich, Moscow 115612 (RU); FILATOVA, Nadezhda Konstantinovna, g. Vidnoe 142700 (RU); SOLOVEV, Vadim Nikolaevich, Moscow 121614 (RU); OZHMEGOV, Kirill Vladimirovich, Moskovskaya oblast g. Zvenigorod 143185 (RU); CHINEIKIN, Sergei Vladimirovich, Udmurtskaya Respublika g. Glazov 427621 (RU); LOZITCKII, Sergei Vasilevich, Udmurtskaya Respublika g. Glazov 427622 (RU); ZIGANSHIN, Aleksandr Gusmanovich, Udmurtskaya Respublika g. Glazov 427628 (RU)
(74) Representative: Friese Goeden Patentanwälte PartGmbB
(86) International application number: PCT/RU2019/001023
(87) International publication number: WO 2021/133194

(57) **Abstract**

The invention is referred to manufacturing of zirconium alloy tubular products that can be used as cladding tubes in water-cooled nuclear reactors.

The manufacturing method for zirconium alloy tubular products containing (% wt.): niobium - 0.9-1.7; iron- 0.10-0.20; oxygen - 0.10-0.20; silicon - less than 0.02, carbon - less than 0.02, zirconium - the alloy base, including the ingot melting by multiple vacuum arc remelting, mechanical processing of the ingot, heating, multi-stage hot forging for production of the forged piece, subsequent mechanical processing of the forged piece for production of tubular billets with vacuum thermal treatment, application of the protective coating and heating to the hot pressing temperature, hot pressing, removal of the protective coating, vacuum thermal treatment, multiple cold rolling with the total deformation degree of 58-74% per a run and the tubular coefficient of Q=1.18 - 2.01, with intermediate vacuum thermal treatment in order to produce tubular products, and the final vacuum thermal treatment is carried out at the final size with subsequent final finishing operations.

The technical result is improved processibility of the material at all stages of hot and cold pressure shaping applied in the course of tubular product manufacturing as well as high corrosion resistance of the tubular products with stable characteristics of mechanical properties and deformation resistance.

## Description

### TECHNICAL FIELD OF THE INVENTION

The invention is referred to the nuclear technical field, particularly to the manufacturing method for zirconium alloy tubular products used as cladding and pressure tubes in water-cooled nuclear reactors, including the reactors of VVER type.

### PRIOR ART

Zirconium alloys are used as the materials for structural components of power nuclear reactors due to their unique properties: small thermal absorption section, corrosion resistance in high-temperature water and the water steam medium, oxidation and hydrogen absorption resistance, low irradiation growth and other physical and mechanical properties. The properties of tubular products depend on the chemical composition and each process operation from the ingot melting to the final finishing operations.

The patent "Manufacturing Method for Zirconium Alloy Tubular Products (Variants)" (RU 2123065C1, published on 12.03.1997, cl. C22F/1/18) including production of the primary blank, production of the tubular billet, cold rolling of the tubular billet with intermediate and final annealing for binary zirconium alloy is known.

The drawbacks of this method reside in the fact that no protective coating is applied on the billet prior to hot extrusion resulting in oxidation of the metal in the course of manufacturing process and reduction of the processibility of tubular products, and no final finishing operations enabling to remove residual process contaminations from the surface of tubular products and reduce the surface roughness are provided thus decreasing corrosion resistance of the products.

The patent "Manufacturing Method for Zirconium Alloy Products" (RU2110600C1, published on 10.05.1998, cl. C22F/1/18) including manufacturing of the primary blank from the ingot by thermal forming, subsequent production of the intermediate billet by thermal forming, quenching and tempering of cut-to-length sections, thermal forming and tempering prior to cold rolling and performance of cold rolling is known.

The drawbacks of this method reside in the fact that no protective coating is applied on the ingot prior to hot extrusion resulting in oxidation of the metal in the course of extrusion process and reduction of the processibility of tubular products, and no final finishing operations enabling to remove residual process contaminations from the surface of the tubular products and reduce the surface roughness are provided thus decreasing corrosion resistance of the products.

The patent "Zirconium Alloy with Improved Corrosion Resistance for Fuel Element Claddings and Their Manufacturing Method" (US 2016/0307651A1, published on 20.10.2016, cl. G21C 3/07, B22D 21/00, B22D 7/00, C22C 16/00, C22F 1/18) is the closest to the claimed method. The method specifies the composition of corrosion-resistant zirconium alloy and the method for manufacturing of fuel element claddings made of this alloy, including the ingot melting, the ingot coating with the protective steel shell, thermal treatment of the ingot together with the shell prior to hot rolling, hot rolling, removal of the protective steel coating, thermal treatment of hot-rolled tubular billets, three runs of cold rolling, intermediate thermal treatment after each rolling and final thermal treatment.

The main drawback of the method is insufficient processing of the material at the cold rolling stage with the total deformation of up to 60% per a run resulting in incomplete elimination of non-uniform hot-rolled structure. The drawbacks of the method also include: application of the carbon-containing steel shell interacting with zirconium alloy at the hot rolling temperature with potential generation of carbides. Besides, the material recrystallization degree is one of the main factors defining processibility and deformation resistance characteristics (resistance to thermal, radiation and thermal creep as well as to irradiation growth) of zirconium alloys. Low temperatures of intermediate annealing (570°C to 590°C for the 1^{st} run, 560°C to 580°C for the 2^{nd} run, 560°C to 580°C for the 3^{rd} run) for the selected deformation manufacturing scheme (30-40% of deformation at the first and the third stages, and 50-60% - at the second stage of cold deformation) are insufficient for relaxation of residual stresses and completion of recrystallization processes that affects not only the material processibility but also its deformation resistance characteristics, particularly under the impact of radiation. Use of the three-level long-term final annealing (1^{st} level - 460°C to 470°C, 2^{nd} level - 510°C to 520°C, 3^{rd} level - 580°C to 590°C) enables to achieve the increased material strength level; in this case the deformation resistance characteristics are deteriorated primarily due to incomplete recrystallization process. The process flow diagram does not provide for any final finishing operations enabling to remove residual process contaminations from the surface of tubular products and reduce the surface roughness thus decreasing corrosion resistance of the products.

### SUMMARY OF THE INVENTION

The purpose of this invention is to develop the manufacturing method for zirconium alloy tubular products of various diameters that can be used as cladding tubes in water-cooled nuclear reactors.

The technical result is improved processibility of the material at all stages of hot and cold pressure shaping applied in the course of tubular product manufacturing as well as high corrosion resistance of the tubular products with stable characteristics of mechanical properties and deformation resistance.

The technical result is achieved due to the fact that the manufacturing method for the tubular products made of zirconium alloy containing (% wt.): niobium - 0.9-1.7; iron- 0.10-0.20; oxygen - 0.10-0.20; silicon - less than 0.02, carbon - less than 0.02, zirconium - all the rest, includes the ingot melting by multiple vacuum arc remelting, mechanical processing of the ingot, heating, multi-stage hot forging for production of the forged piece, subsequent mechanical processing of the forged piece for production of tubular billets with vacuum thermal treatment, application of the protective coating and heating to the hot pressing temperature, hot pressing, removal of the protective coating, vacuum thermal treatment, multiple cold rolling with the total deformation degree of 58-74% per a run and the tubular coefficient of Q=1.18 - 2.01, with intermediate vacuum thermal treatment in order to produce tubular products, and the final vacuum thermal treatment is carried out at the final size with subsequent final finishing operations.

Multi-stage hot forging of the ingot is carried out at the temperature of 980°C to 700°C with the total deformation degree of up to 93% and with intermediate heating at the temperature of 850°C to 800°C.

Thermal treatment of the forged piece is carried out at the temperature of 1050°C to 1100°C with subsequent water cooling.

Tubular billets are produced by drilling and subsequent boring of the axial center hole in the forged piece divided into cut-to-length sections.

Vacuum thermal treatment of the tubular billets prior to hot pressing is carried out at the temperature of 570°C to 600°C.

Hot pressing of the tubular billet is carried out at the temperature of 600°C to 620°C and the elongation ratio of µ=8.9.

Vacuum thermal treatment of the tubular billets after hot pressing is carried out at the temperature of 565°C to 595°C.

Intermediate vacuum thermal treatment of the tubular products between multiple cold rollings and the final vacuum thermal treatment of the tubular products are carried out at the temperature of 565°C to 595°C.

Vacuum thermal treatment of the tubular billets and products is carried out at the residual pressure in the furnace of 1·10⁻⁴-1·10⁻⁵ mm Hg.

Chemical and mechanical processing of the surfaces is carried out at the final size of the tubular products.

The selected proportion of alloying components in the zirconium alloy provides for the processing properties, corrosion resistance, stable characteristics of mechanical properties and deformation resistance of the tubular products.

The advantage of the tubular product manufacturing in accordance with the claimed method resides in the fact that hot forging and pressing ensures uniform processing of the cast structure along the ingot length and cross-section, and application of the copper protective coating provides for protection against gas pickup and prevents diffusion interaction between the coating and the billet. Cold rolling with intermediate thermal treatment provides for homogeneous recrystallized structure of the tubular products with high mechanical properties and also the required anisotropy of properties in the transverse and longitudinal direction. Final finishing operations provide for roughness Ra of less than 0.8 µm on the outer and inner surface thus increasing stability of the corrosion properties. The inner surface roughness enables to improve the processes for loading of fuel pellets into the tubular products.

### EMBODIMENT OF THE INVENTION

The method is embodied in the following way:

### Example

In accordance with the claimed technical solution the manufacturing technology for zirconium tubular products includes the following operations. Melting of the alloy ingot consisting of: niobium - 1.00-1.03% wt., iron - 0.116-0.119% wt., oxygen - 0.120-0.125% wt., silicon - 0.002-0.003% wt., carbon - 0.003-0.005% wt., zirconium - all the rest. The initial alloying components are mixed with zirconium magnesiothermal sponge, and then consumable electrodes are formed and melted by three-stage vacuum arc remelting. The ingot is processed mechanically. The ingot is heated to the temperature of 930°C - 980°C in the electric resistance-type furnace. Multi-stage forging of the ingot after heating is carried out within the temperature range of 980°C to 700°C with intermediate heat-up in the electric resistance-type furnace within the temperature range of 850°C to 800°C. The total deformation Σε in the course of hot deformation processing of the ingot was up to 93%. The forged piece is heated to the temperature of 1050°C - 1100°C with subsequent water cooling. The forged piece is cut into cut-to-length sections and processed mechanically to the size of Ø109×28.5 mm; then the tubular billets are manufactured by drilling and subsequent boring of the axial center hole.

Vacuum thermal treatment is carried out at the temperature of 570°C to 600°C. Surface roughness of the billets is not more than Rₐ=2.5 µm. Then copper coating is applied on the tubular billets in order to protect them against gas pickup in the course of subsequent heating and hot pressing processes. Heating of the tubular billets for hot pressing is carried out in the induction furnace. The heating temperature of the tubular billets prior to pressing is within the range of 600°C to 620°C. Pressing is carried out with the elongation ratio of µ=8.9. Then the copper coating is removed and vacuum thermal treatment is carried out at the temperature of 565°C to 595°C. The tubular billets are rolled on the cold reducing mill of HPT, 2HPTS, KPW type in 4 runs with the total deformation Σε of 58% to 74% per a run, in this case the tubular coefficient Q is within the range of 1.18-2.01. Intermediate thermal treatment is carried out within the temperature range of 565°C to 595°C in vacuum at the residual pressure in the furnace not exceeding 1·10⁻⁴-1·10⁻⁵ mm Hg.

Subsequent to the final vacuum thermal treatment of the tubular products at the temperature of 565°C to 595°C package or jet etching, abrasive processing of the inner surface, grinding and polishing of the outer surface are performed.

### INDUSTRIAL APPLICABILITY

The zirconium alloy tubular products manufactured in accordance with the claimed technical solution are characterized with the following properties (Table 1).

Thus, the presented tube manufacturing method enables to produce tubular products with high corrosion resistance, stable characteristics of mechanical properties and deformation resistance

**Table 1 - Properties of the tubes manufactured of the Zr-Nb system alloy in accordance with the claimed technical solution**

| No. | Chemical composition of the alloy, % wt. | Number of remeltings/ weight of the final remelting ingot, tons | Tube dimensions, mm | Mechanical properties | | | | | | | | | | | | Corrosion 400°C τ =72 h | Roughness Ra, µm |
|---|---|---|---|---|---|---|---|---|---|---|---|---|---|---|---|---|---|
| | | | | σ_{b}┴ MPa | σ_{0.2}┴, MPa | δ┴, % | σ_{b}^{//}, MPa | σ _{0.2}^{//}, MPa | δ^{//}, % | σ_{b}┴, MPa | σ_{0.2}┴, MPa | δ┴, % | σ_{b}^{//}, MPa | σ_{0.2}^{//}, I^{I} , MPa | δ^{//}, % | Weight gain, mg/dm² | |
| | | | | T test=20°C | | | | | | T test=380°C | | | | | | | |
| 1 | niobium- 1.00-1.03; iron - 0.116-0.119; oxygen - 0.120-0.125; silicon- 0.002-0.003; carbon - 0.003-0.005; zirconium - all the rest | 3 vacuum arc remeltings/ 1.2 | Ø9.10×7.73 | 500-520 | 440-460 | 26-31 | - | - | - | 206-216 | 176-186 | 37-42 | - | 118-127 | - | 14-15 | Outer surf. <0.4 |
| | | | | | | | | | | | | | | | | | Inner surf. <0.8 |
| | | | Ø9.10×7.93 | 500-520 | 430-440 | 28-31 | 520-540 | 353-392 | 45-48 | 196-206 | 167-186 | 38-42 | 216-225 | 118-127 | 62-68 | 15-17 | Outer surf. <0.4 |
| | | | | | | | | | | | | | | | | | Inner surf. <0.8 |
| | | | Ø9.50×8.33 | 500-520 | 440-460 | 30-33 | - | - | - | 196-206 | 176-186 | 40-44 | 225 | 118-127 | 61-67 | 15-17 | Outer surf. <0.4 |
| | | | | | | | | | | | | | | | | | Inner surf. <0.8 |

## Claims

1. The manufacturing method for zirconium alloy tubular products containing (% wt.): niobium - 0.9-1.7; iron- 0.10-0.20; oxygen - 0.10-0.20; silicon - less than 0.02, carbon - less than 0.02, zirconium - all the rest, including the ingot melting by multiple vacuum arc remelting, mechanical processing of the ingot, heating, multi-stage hot forging for production of the forged piece, subsequent mechanical processing of the forged piece for production of tubular billets with vacuum thermal treatment, application of the protective coating and heating to the hot pressing temperature, hot pressing, removal of the protective coating, vacuum thermal treatment, multiple cold rolling with the total deformation degree of 58-74% per a run and the tubular coefficient of Q=1.18 - 2.01, with intermediate vacuum thermal treatment in order to produce tubular products, and the final vacuum thermal treatment is carried out at the final size with subsequent final finishing operations.

2. The method as claimed in Claim 1 **characterized in that** multi-stage hot forging of the ingot is carried out at the temperature of 980°C to 700°C with the total deformation degree of up to 93% and with intermediate heating at the temperature of 850°C to 800°C.

3. The method as claimed in Claim 1 **characterized in that** thermal treatment of the forged piece is carried out at the temperature of 1050°C to 1100°C with subsequent water cooling.

4. The method as claimed in Claim 1 **characterized in that** tubular billets are produced by drilling and subsequent boring of the axial center hole in the forged piece divided into cut-to-length sections.

5. The method as claimed in Claim 1 **characterized in that** vacuum thermal treatment of the tubular billets prior to hot pressing is carried out at the temperature of 570°C to 600°C.

6. The method as claimed in Claim 1 **characterized in that** hot pressing of the tubular billet is carried out at the temperature of 600°C to 620°C and the elongation ratio of µ=8.9.

7. The method as claimed in Claim 1 **characterized in that** vacuum thermal treatment of the tubular billets after hot pressing is carried out at the temperature of 565°C to 595°C.

8. The method as claimed in Claim 1 **characterized in that** intermediate vacuum thermal treatment of the tubular products between multiple cold rollings and the final vacuum thermal treatment of the tubular products are carried out at the temperature of 565°C to 595°C.

9. The method as claimed in any of Claims 5, 7, 8 **characterized in that** vacuum thermal treatment of the tubular billets and products is carried out at the residual pressure in the furnace of 1·10⁻⁴-1·10⁻⁵ mm Hg.

10. The method as claimed in Claim 1 **characterized in that** chemical and mechanical treatment of the surfaces is carried out at the final size of the tubular products.
